# EUROPEAN PATENT APPLICATION

(11) **EP 1 677 186 A1**
(43) Date of publication of application: **05.07.2006**
(21) Application number: 04107056.6
(22) Date of filing: 29.12.2004
(51) Int. Cl.: G06F 9/44, G06F 9/54

(54) **Data object change notification agent**

(71) Applicant: SAP AG, 69190 Walldorf (DE)
(72) Inventor: Gschiermeister, Claus, 76227, Karlsruhe (DE); Alvarez, Gabriel, 68766, Hockenheim (DE); Poetschke, Dominic, 76275, Ettlingen (DE); Rieken, Gregor, 69190, Walldorf (DE)
(74) Representative: Schneider, Günther Martin

(57) **Abstract**

A computer-implemented method and framework for administrating data objects in an information technology architecture comprising data objects and applications, wherein each application processes at least one of the data objects, the data objects being subject to changes, and wherein entries representative of data objects are registered in a first data structure; entries representative of applications are registered in a second data structure, each entry comprising specifying data objects whose changes are relevant for the respective application, the method performing the following steps: receiving notifications regarding registered data objects as to changes of the data objects; upon each receipt of a notification, getting changed data from the notifying data object; checking, among the registered applications, as to whether the change is relevant for the applications, notifying each application about the change if the change is relevant for the application; and transmitting the relevant changed data to the application.

## Description

### BACKGROUND OF THE INVENTION

The present invention relates to a frame work for administrating changes in data objects within an information technology architecture. The invention may be used for example in logistics or in a supply chain management environment.

### STATE OF THE ART

In an object-oriented computer program environment comprising many data objects and many applications wherein each application processes one or more of the data objects, objects may be subject to many changes over time. Some instances of an object change, others may be newly created. These changes may be relevant for some but not always all of the applications. The respective applications may trigger post-processes dependent on the changes for implementing the changes.

To deal with this situation, currently in an object-oriented computer program environment, data objects have to implement specific logic within their update process directly. When a data object is modified or added, each application which is based on the data object is to be modified separately. Thus, update process and post-processing (on the application side) is directly coupled.

### SUMMARY OF THE INVENTION

In general, in one aspect, this invention provides a computer-implemented method for administrating data objects in an information technology architecture comprising a plurality of data objects and a plurality of applications, wherein each application processes at least one of the data objects, the plurality of data objects being subject to changes, and wherein:
entries representative of data objects are registered in a first data structure;
entries representative of applications are registered in a second data structure, each entry comprising specifying data objects whose changes are
relevant for the respective application;
the method performing the following steps:
receiving notifications regarding registered data objects as to changes of the data objects;
upon each receipt of a notification,
   getting changed data from the notifying data object;
   checking, among the registered applications, as to whether the change is relevant for the applications,
   notifying each application about the change if the change is relevant for the application; and
   transmitting the relevant changed data to the application.

In another aspect, the invention provides a computer-implemented framework for administrating data objects in an object-oriented computer program environment comprising a plurality of data objects, a plurality of methods for processing data objects, and a plurality of computer program applications, wherein each application makes use at least one of the data objects, whereby the data objects are subject to changes, the framework comprising:
an agent for administrating changes of data objects, the agent being configured to perform the following steps:
   registering entries representative of data objects in a first data structure;
   registering entries representative of applications in a second data structure, each entry comprising specifying data objects whose changes are relevant for the respective application;
a first method to be called by a data object for notifying the agent about changes of the calling data object;
a second method to be called by the agent for getting changed data from the notifying data object;
a third method to be called by the agent for checking, among the registered applications, as to whether the change is relevant for the applications, and
notifying each application about the change if the change is relevant for the application; and
a fourth method to be called by the agent for transmitting the relevant changed data to the application after the step of notifying the application.

Further embodiments of the invention can comprise the following features.

In both aspects of the invention, there can be implemented additionally a step of expecting a confirmation of changes from an application after the step of transmitting the changed data to the application.

Furthermore, there can be implemented a step of triggering a mechanism if an expected conformation is not received.

Further, there can be provided a step of registering entries of sub-objects, a sub-object being a set of data which is changed in dependence on a change of a key data object.

Yet further, there can be provided a step of transmitting the relevant changed sub-object data to the application after a step of notifying the application.

Specifying data objects whose changes are relevant for the respective application may comprise receiving a list of fields whose changes are relevant for the respective application.

In a further embodiment of both aspects of the invention there can be provided a step of filtering out data objects whose changes are not to be communicated to an application, prior to the step of transmitting the relevant changed data to the application.

The step of registering entries representative of applications may include specifying as to which changes of a data object are relevant for the application.

The entries of data objects and applications may be registered in a customization structure of an agent.

A data object may represent one of location, location-product, and transportation lane in context of a business application.

Furthermore, the invention comprises computer-readable storage media comprising program code for performing the inventive methods, when loaded into a computer system.

One of the advantages is that the present invention provides a decoupling of the update process and post-processing. Moreover, there is more flexibility in implementing additional filtering logics and further functionality (such as queue logics), and more transparency. This leads to an improvement in performance of the whole update process.

Thus, the inventive methods and framework provide an abstraction layer between a data object and an application that is "interested" in changes on these objects. "Interested" means that the application that needs to get the changes implemented. General methods and operations relating to receiving the changes while they are stored to database, filtering and passing through those events to interested applications and triggering application methods are bundled together within the framework.

In other words, there is a complete separation between the business model layer representing the data objects and the application layer. By providing such a clean separation between both of them, it is possible to add new objects to the framework and connect additional applications and still expect the same type of behaviour from the framework. This provides a big advantage to both, the objects and the applications, because they both only have to implement a single class once and can provide/ receive changes to/ from all opposite instances.

Moreover, this architecture allows functional enhancements and making adjustments to the framework itself without enforcing the connected objects and applications to change their implementations if they do not want to participate to those functional enhancements. One example might be some kind of queue logic to restart a trigger to an application in case the application did not return a success message as confirmation of the last trigger.

### BRIEF DESCRIPTION OF DRAWINGS

The accompanying drawings, which constitute a part of the specification, illustrate embodiments of the invention, and may serve in connection with the description to explain principles of the invention.

### In the drawings:

- Fig. 1: illustrates an overview of the environment in which the invention is applied;
- Fig. 2: illustrates a flow diagram of the inventive method according to one embodiment of the invention;
- Fig. 3: illustrates a further embodiment of the invention;

- Fig. 4: illustrates a sequence diagram of the process according to the present invention; and
- Fig. 5: illustrates a diagram with classes and methods.

### DETAILED DESCRIPTION

The embodiments of the invention described hereinafter are denoted a change notification agent (CNA). In the following, the term "object" is used to refer to a particular master data object (i.e., a physical Location, Location-Product, or Transportation Lane in the context of an application, for example a logistics application or a supply chain management environment.

The term B&A-Image ― abbreviation for before- and after-Image ― is used to refer to different Images in the process of changing an object that are communicated over the CNA.

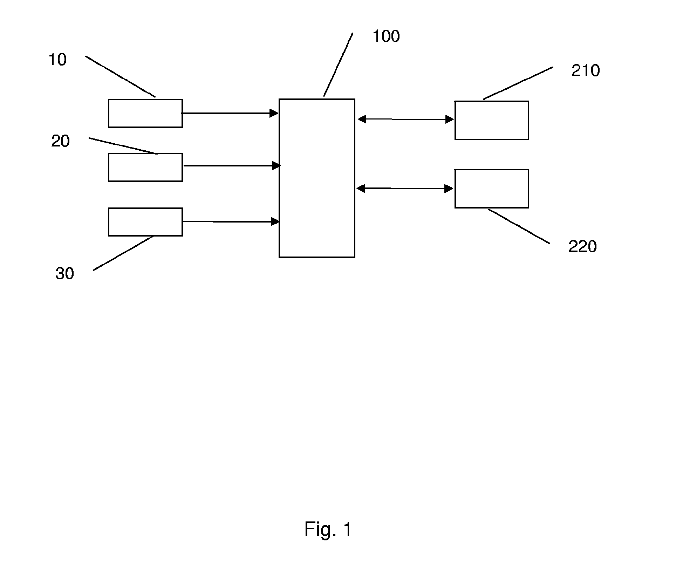

Fig. 1 illustrates a CNA 100 which is configured to communicate, on the one hand, with a number of data objects 10, 20, 30, and on the other hand, with a number of applications 210, 220 which each works with one or more of these objects. The objects may represent locations, location-product, and transportation lane in context of a business application. The objects are subject to changes. Furthermore, new objects may be added or objects may be deleted. As soon as there is a change in the objects, there may be changes necessary in applications as well. Since not all the applications are working on the same objects, the changes on one particular object may require changes at one application but not at another one. The CNA 100 is the tool for administrating the changes on the applications side.

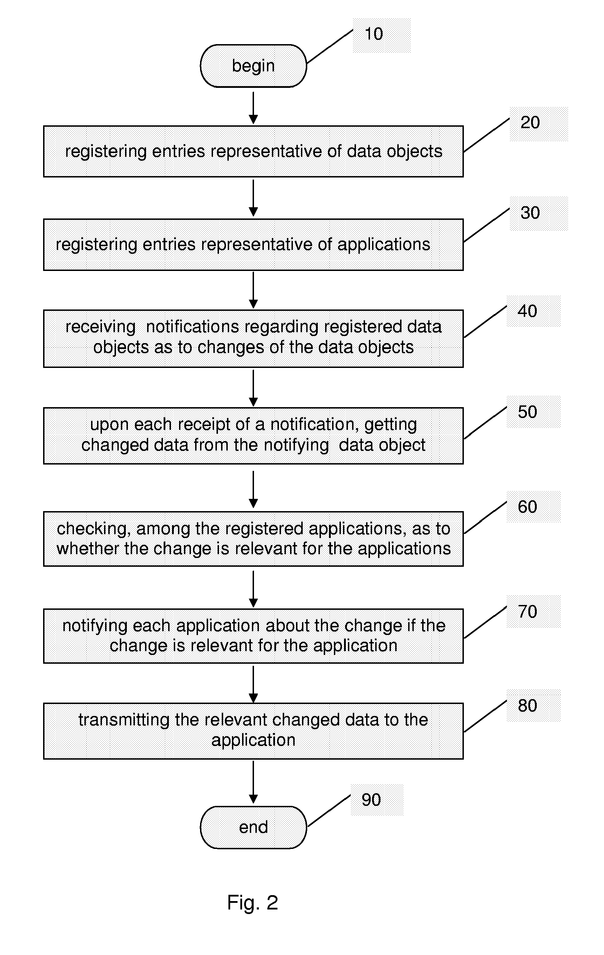

Fig. 2 illustrates the inventive method of administrating data objects in the information technology architecture. The method is implemented by a process running under control of a computer program. It acts as an agent. The process begins in step 10.

In step 20, entries which are representative of data objects are registered. In the following step, entries representative of applications are registered. In the entries, the data objects are specified whose changes are relevant for the respective application.

Then, the agent is operable to receive notifications regarding registered data objects as to changes of the data objects, step 40.

Upon each receipt of such a notification by the agent, the program goes to step 50 where changed data from the notifying data object are requested.

Then, in step 60, the agent checks among the registered applications as to whether the change is relevant for the applications.

Each application for which the change has been determined to be relevant, is notified about the change, step 70.

Step 70 is followed by a step 80 of transmitting the relevant changed data to the application.

Finally, the notification and update process ends with step 90.

As it is clear from this description, steps 10 to 40 concern the customization of the agent, while steps 50 to 80 are the notification steps executed during run-time of agent and applications connected thereto. Notification steps 50 to 80 are repeated for every received notification. Therefore, the customization steps can be performed independently from the notification steps 50 to 80 (and vice versa). Once the customization has been completed, the notification steps are iteratively performed.

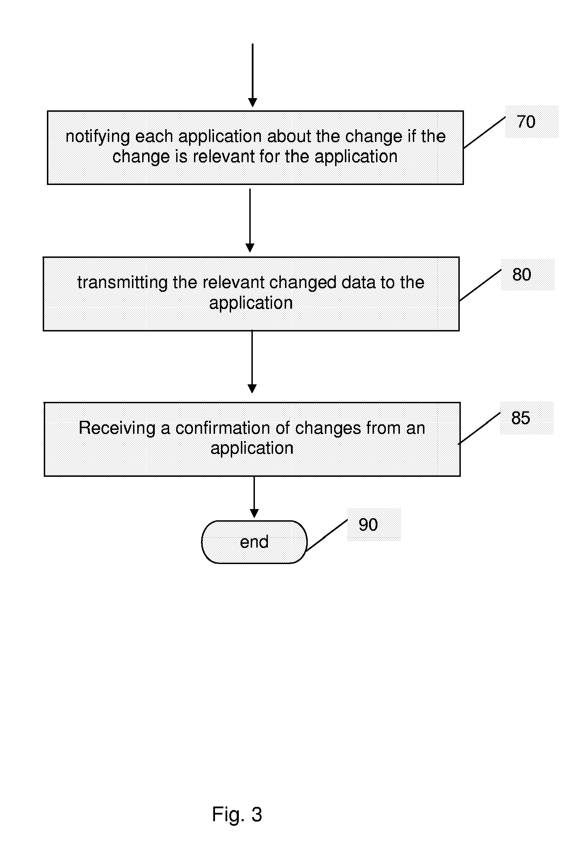

In a second embodiment of the invention, which is illustrated in Fig. 3, step 80 as described above is followed by a step 85 of receiving a confirmation of changes from an application. The other steps are the same as in the first embodiment.

The object-oriented program environment may comprise data objects which are changed in dependency of other data objects. Such objects are denoted as sub-objects. These sub-objects may be registered with the agent as well.

A third embodiment of the invention deals with such sub-objects. According to this embodiment, a step is performed of transmitting the relevant changed sub-object data to the application after the step 70 of notifying the application about the changes. Again, the other steps are the same as in the first and second embodiments described above.

In case that not all the changes of an object are relevant for each of the registered applications, the agent may maintain a list of fields of the respective data object whose changes are relevant for the respective application. Then, based on this list, a step is performed of filtering out data objects whose changes are not to be communicated to an application, prior to the step of transmitting the relevant changed data to the application.

If a data object should make use of the CNA, the data object is registered with the CNA (refer to step 20) through the customizing part provided by in the framework. Hereto, a computer screen is presented to the developer where the relevant data concerning the object can be provided to the CNA. In the same way, the applications which are intended to make use of the CNA are registered through the customizing part provided by the invention.

As to the data to be provided at registration, an entry for an object comprises:
- an ID representative of the data object;
- an ID representative of the key of the data object;
- a flag representative of activity;
- an ID representative of the key structure of the data object;
- an ID of the wrapper class.

An entry for a sub-object to an object comprises:
- an ID representative of the sub-object;
- an ID representative of the key data object;
- an ID representative of the structure of the data object;
- an ID representative of the object key object.

The sub-objects comprise object data with an additional key to the key object.

An entry for an application comprises:
- an ID representative of the application;
- a flag representative of activity;
- an ID representative of the expected structure of notification.

The flag representative of the activity indicates whether the defined object is actually used or not. The wrapper class denotes the name of the class which the object or the application has programmed.

With the information structure the application decides implicitly what changes on which fields are relevant for an application.

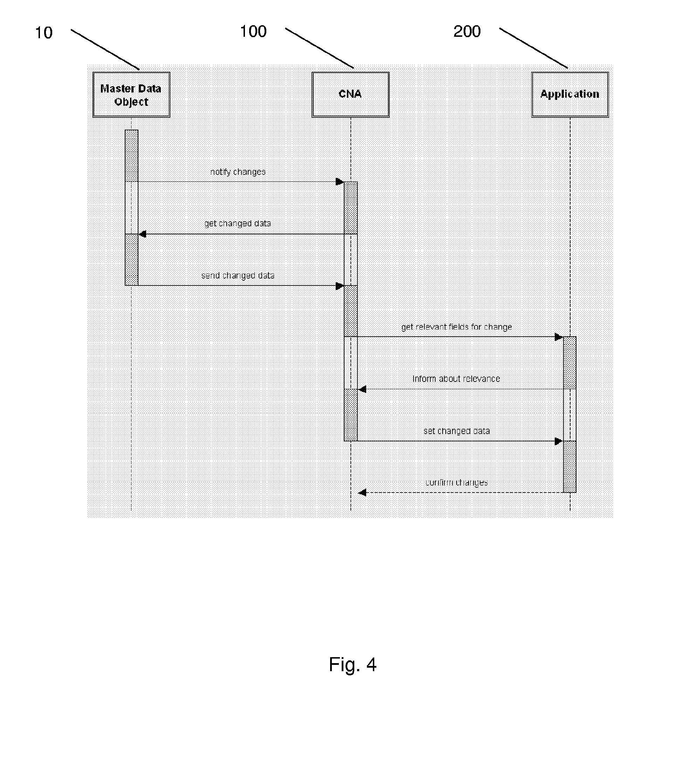

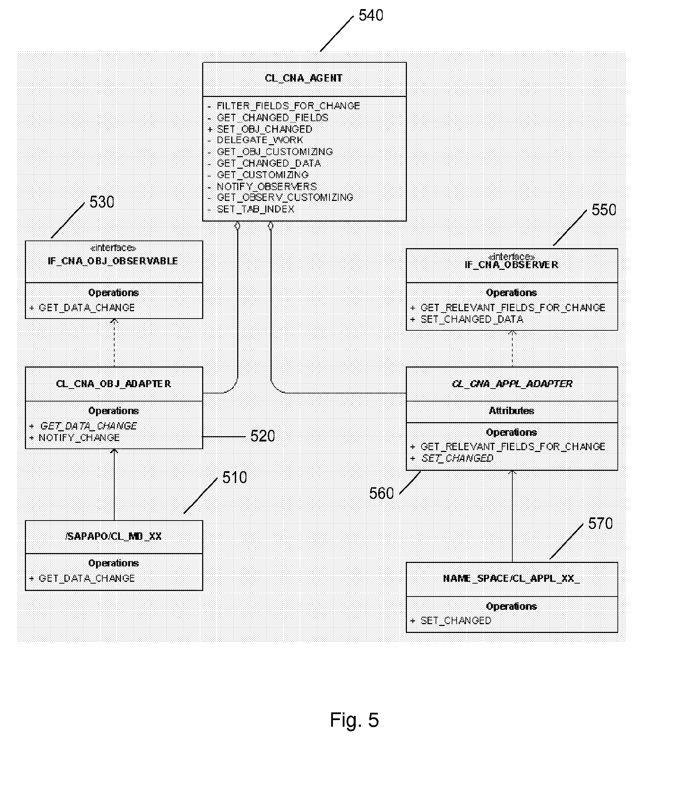

With reference to Fig. 4 and 5, the process of administrating objects and their changes is described.

The sequence diagram of Fig. 4 shows the time relationship of the execution of the process steps described above for just one object 10 and one application 200 once they have been registered with the CNA 100. For performing the steps, corresponding methods are provided. The methods together with their classes 510-570 are displayed in Fig. 5.

The change notification from the data object to the CNA is performed in the following way:
The data object that wants to report changes creates an instance of the object specific implemented class CL_CNA_MD_XX 510 and hands over all relevant data to this instance.
Then, the object calls the method NOTIFY_CHANGE of the class CL_OBJ_ADAPTER 520 with the change data in type of the registered structure in the customizing to that object. This structure has to include a data structure named CNA_KEY_OBJECT_PREFIX. Herein, the object has to fill an exclusive indicator to the changed object, the type of change, and an indicator if the set of data is a before (B) or an after (A) Images. In case of deletion, a B-Image should be provided. In case of a new created object an A-Image should be provided. The object should be able the set a switch, that no call-back is unwanted or not necessary. In that case, CNA will not try to read additional information for sub-objects.
The method NOTIFY_CHANGE additionally creates an instance of the main CNA-class CL_CNA_AGENT 540 and hands over to the access method SET_OBJ_CHANGED its own instance and the information about what type of object it is reporting about.
NOTIFY_CHANGE addresses the workload to the CNA-method DELEGATE_WORK.
Reading out customizing GET_CUSTOMIZING of the involved object: GET_OBJ_CUSTOMIZING, and the connected applications: GET_OBSERVER_CUSTOMIZING.
Check if object is active in terms of CNA customizing. Call-back to objects method GET_ CHANGED_DATA in order to get all B&A-Images of the dependent sub-objects.

One the other hand, change notification from CNA to an application is performed in the following way:
All actions on the applications side of the communication are controlled by the CNA-method NOTIFY_OBSERVERS and work as described in the following steps:
   In a first step, all the fields and sub-objects that are relevant to an application should be read out. The relevant fields of the main object are registered in the applications customizing. This structure has to include CNA_KEY_OBJECT_PREFIX. The relevant sub-objects will be provided by the call-back method GET_RELEVANT_FIELDS_FOR_CHANGE of CNA-observer class 550. Beside from that, the application can decide by switches, if it is interested in newly created data and deletions.
   CNA checks on the basis of the data evaluated in the first step for each changed object if it is relevant to one of the registered applications, and copies the entry in an application specific hand over structure. The result of this step is one table of relevant changes plus its corresponding dependent objects for each application. The main table is again of customized structure type, the dependents to these objects adapt the customized structure from the object.
   Before the changes are finally communicated to the applications, an applications method named FILTER_CHANGED_DATA is called. Here the applications can define special logics to filter out some additional objects and prevent them to be reported.
   Finally, the method SET_CHANGED_DATA is called in order to trigger applications post-processes.

The present techniques can be implemented in digital electronic circuitry, or in computer hardware, firmware, software, or in combinations of them. Apparatus of the invention can be implemented in a computer program product tangibly embodied in a machine-readable storage device for execution by a programmable processor. Method steps according to the invention can be performed by a programmable processor executing a program of instructions to perform functions of the invention by operating on the basis of input data, and by generating output data. The invention may be implemented in one or several computer programs that are executable in a programmable system, which includes at least one programmable processor coupled to receive data from, and transmit data to, a storage system, at least one input device, and at least one output device, respectively. Computer programs may be implemented in a high-level or object-oriented programming language, and/or in assembly or machine code. The language or code can be a compiled or interpreted language or code. Processors may include general and special purpose microprocessors. A processor receives instructions and data from memories, in particular from read-only memories and/ or random access memories. A computer may include one or more mass storage devices for storing data; such devices may include magnetic disks, such as internal hard disks and removable disks; magneto-optical disks; and optical disks. Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and CD-ROM disks. Any of the foregoing can be supplemented by or incorporated in ASICs (application-specific integrated circuits).

The computer systems or distributed computer networks as mentioned above may be used, for example, for producing goods, delivering parts for assembling products, controlling technical or economical processes, or implementing telecommunication activities.

To provide for interaction with a user, the invention can be implemented on a computer system having a display device such as a monitor or LCD screen for displaying information to the user and a keyboard and a pointing device such as a mouse or a trackball by which the user can provide input to the computer system. The computer system can be programmed to provide a graphical or text user interface through which computer programs interact with users.

A computer may include a processor, memory coupled to the processor, a hard drive controller, a video controller and an input/output controller coupled to the processor by a processor bus. The hard drive controller is coupled to a hard disk drive suitable for storing executable computer programs, including programs embodying the present technique. The I/O controller is coupled by means of an I/O bus to an I/O interface. The I/O interface receives and transmits in analogue or digital form over at least one communication link. Such a communication link may be a serial link, a parallel link, local area network, or wireless link (e.g. an RF communication link). A display is coupled to an interface, which is coupled to an I/O bus. A keyboard and pointing device are also coupled to the I/O bus. Alternatively, separate buses may be used for the keyboard pointing device and I/O interface.
Embodiments are in the scope of the following claims.

## Claims

1. A computer-implemented method for administrating data objects in an information technology architecture comprising a plurality of data objects and a plurality of applications, wherein each application processes at least one of the data objects, the plurality of data objects being subject to changes, and wherein:
entries representative of data objects are registered in a first data structure;
entries representative of applications are registered in a second data structure, each entry comprising specifying data objects whose
changes are relevant for the respective application;
the method performing the following steps:
receiving notifications regarding registered data objects as to changes of the data objects;
upon each receipt of a notification,
getting changed data from the notifying data object;
checking, among the registered applications, as to whether the change is relevant for the applications,
notifying each application about the change if the change is relevant for the application; and
transmitting the relevant changed data to the application.

2. The method of claim 1, further comprising a step of expecting a confirmation of changes from an application after the step of transmitting the changed data to the application.

3. The method of claim 2, further comprising a step of triggering a mechanism if an expected conformation is not received.

4. The method of one of the preceding claims, further comprising a step of registering entries of sub-objects, a sub-object being a set of data which is changed in dependence on a change of a key data object.

5. The method of claim 4, further comprising a step of transmitting the relevant changed sub-object data to the application after a step of notifying the application.

6. The method of one of the preceding claims, wherein specifying data objects whose changes are relevant for the respective application comprises receiving a list of fields whose changes are relevant for the respective application.

7. The method of one of the preceding claims, further comprising a step of filtering out data objects whose changes are not to be communicated to an application, prior to the step of transmitting the relevant changed data to the application.

8. The method of one of the preceding claims, wherein the step of registering entries representative of applications includes specifying as to which changes of a data object are relevant for the application.

9. The method of one of the preceding claims, wherein the entries of data objects and applications are registered in a customization structure of an agent.

10. The method of one of the preceding claims, wherein an entry for an object comprises:
- an ID representative of the data object;
- an ID representative of the key of the data object;
- a flag representative of activity;
- an ID representative of the key structure of the data object;
- an ID of the wrapper class.

11. The method of one of the preceding claims, wherein an entry for an application comprises:
- an ID representative of the application;
- a flag representative of activity;
- an ID representative of the expected structure of notification.

12. The method of one of the preceding claims, wherein an entry for a sub-object comprises:
- an ID representative of the sub-object;
- an ID representative of the key data object;
- an ID representative of the structure of the data object;
- an ID representative of the object key object.

13. The method of one of the preceding claims, wherein a data object represents one of location, location-product, and transportation lane in context of a business application.

14. A computer-implemented framework for administrating data objects in an object-oriented computer program environment comprising a plurality of data objects, a plurality of methods for processing data objects, and a plurality of computer program applications, wherein each application makes use at least one of the data objects, whereby the data objects are subject to changes, the framework comprising:
an agent for administrating changes of data objects, the agent being configured to perform the following steps:
registering entries representative of data objects in a first data structure;
registering entries representative of applications in a second data structure, each entry comprising specifying data objects
whose changes are relevant for the respective application;
a first method to be called by a data object for notifying the agent about changes of the calling data object;
a second method to be called by the agent for getting changed data from the notifying data object;
a third method to be called by the agent for checking, among the registered applications, as to whether the change is relevant for the applications, and notifying each application about the change if the change is relevant for the application; and
a fourth method to be called by the agent for transmitting the relevant changed data to the application after the step of notifying the application.

15. The framework of claim 14, wherein the agent is further configured to perform the following steps:
presenting a first input interface to allow for registering the entries representative of data objects;
presenting a second input interface to allow for registering the entries representative of applications.

16. The framework of claim 14 or 15, wherein the agent is further configured to perform a step of expecting to receive a confirmation of changes from an application after the step of transmitting the changed data to the application.

17. The framework of claim 16, wherein the agent is further configured to perform a step of triggering a mechanism if an expected conformation is not received.

18. The framework of one of claims 14 to 17, wherein the agent is further configured to perform a step of registering entries of sub-objects, a sub-object being a set of data which is changed in dependence on a change of a key data object.

19. The framework of claim 18, wherein the agent is further configured to perform a step of transmitting the relevant changed sub-object data to the application after a step of notifying the application.

20. The framework of one of claims 14 to 19, wherein the agent is further configured to maintain a list of fields whose changes are relevant for the respective application.

21. The framework of one of claims 14 to 20, wherein the agent is further configured to perform a step of filtering out data objects whose changes are not to be communicated to an application, prior to the step of transmitting the relevant changed data to the application.

22. The framework of one of claims 14 to 21, wherein the step of registering entries representative of applications includes specifying as to which changes of a data object are relevant for the application.

23. The framework of one of claims 14 to 22, wherein the entries of data objects and applications are registered in a customization structure of the agent.

24. The framework of one of claims 14 to 23, wherein an entry for an object comprises:
- an ID representative of the data object;
- an ID representative of the key of the data object;
- a flag representative of activity;
- an ID representative of the key structure of the data object;
- an ID of the wrapper class.

25. The framework of one of claims 14 to 24, wherein an entry for an application comprises:
- an ID representative of the application;
- a flag representative of activity;
- an ID representative of the expected structure of notification.

26. The framework of one of claims 14 to 25, wherein an entry for a sub-object comprises:
- an ID representative of the sub-object;
- an ID representative of the key data object;
- an ID representative of the structure of the data object;
- an ID representative of the object key object.

27. The framework of one of claims 14 to 26, wherein a data object represents one of location, location-product, and transportation lane in context of a business application.

28. A computer-readable storage medium comprising program code for performing the method according to one of claims 1 to 13, when loaded into a computer system
